# EUROPEAN PATENT APPLICATION

(11) **EP 1 030 468 A1**
(43) Date of publication of application: **23.08.2000**
(21) Application number: 99301231.9
(22) Date of filing: 19.02.1999
(51) Int. Cl.: H04B 7/185

(54) **Communication apparatus and method with interference mitigation**

(71) Applicant: ICO Services Ltd., London W6 9BN (GB)
(72) Inventor: Wyrwas, Richard, Southgate, London N14 6LN (GB)
(74) Representative: Musker, David Charles

(57) **Abstract**

A satellite communications system comprising at least one satellite (4) in orbit about the Earth, and being for receiving a user uplink signal from a user terminal (2) adjacent the Earth, in the presence of co-channel interference from at least one interference source (121) adjacent the Earth, further comprising means for interference mitigation, characterised in that said interference mitigation means comprises an interference store (250) for storing interference data characterising at least a first signal, and means (270, 232, 234, 236) for iteratively forming an interference estimate from said data in accordance with at least one variable parameter, for locating a value thereof to maximise the mitigation of said uplink signal, and for processing said uplink signal in accordance with said value and said interference data.

## Description

### FIELD OF THE INVENTION

This invention relates to communications with a mobile user, and particularly (but not exclusively) to such communications in which the link to the mobile user is via a satellite or satellites.

Terrestrial cellular communication systems are well known in the art and a number of standards, such as the GSM standard and the PCN standard exist which define different signalling protocols for them. Details of these standards are given for example in "Mobile Radio Technology" by Gordon White, Butterworth Heinemann, 1994. The GSM and PCN systems are digital communication systems and allow paging and data communications in addition to voice communications.

Mobile satellite communication systems have also been proposed in which radio frequency links are provided by a constellation of satellites. These satellite communication systems provide much greater coverage than terrestrial cellular systems. One example of such a system is the ICO™ system, aspects of which are described in patent publications WO 95/28747, WO 96/03814 and GB 2,295,296A. Other examples include the Iridium™ satellite cellular system, described for example in EP-A-0365885, and the Odyssey™ mobile communication system described for example in EP-A-0510789, EP-A-0575678 and EP-A-0648027.

An alternative proposed satellite cellular system is described in EP 0536921 and EP 0506255.

Because of the altitude of the satellites, the distance travelled by a signal from the user terminal to the satellite, and from the satellite to the Earth station, is much longer than the distance between a terrestrial user terminal and its local based station. According, the attenuation undergone by the signal is substantially higher.

In the user terminal uplink direction, the power available from some types of terminal (such as handsets) is very limited, and the gain of the user terminal antennas may be very low. As the satellite has somewhat higher power, the signal strength on the user downlink is somewhat larger. In the feeder link between the Earth station and the satellite, more power and higher gain antennas are available. Accordingly, the user terminal uplink is, in many cases, the link on which the signal is most susceptible to noise.

In addition to the thermal noise radiated by the planet on which the terminals are located, each user terminal may interfere with transmissions from others (despite nominally occupying a different time or frequency channel) due to errors or spreading in time and frequency.

Furthermore, although radio frequency usage is regulated, the fact that satellite systems cover the whole or a substantial part of the world makes it likely that in at least some areas, the frequencies used on the user link will also be used by terrestrial transmitters, which are therefore, from the point of view of the satellite system, interference generators.

Such interferors may be of several different types, and may be broad band or narrow band; random or repetitive; high power or low power and so on.

EP 0519021 discloses a method of reducing interference between terrestrial and satellite communications systems by controlling the power levels in the terrestrial system.

WO 96/031016 discloses a method of preventing interference between two satellite systems by predicting the zone where interference will occur and inhibiting transmission into that zone by one of the systems.

An object of the present invention is to reduce the effects of interference, particularly in the user terminal uplink direction of a satellite communication system.

The present invention provides, in one aspect, an interference mitigation system for a satellite communications network, which iteratively estimates one or more interferors to locate an optimum interference estimate with which to process the uplink (e.g. to subtract out the estimate).

In a second aspect, the present invention provides an interference mitigation system for a satellite communications network, which forms a first estimated interference signal, processes a signal derived from the satellite uplink to reduce the effect of the first signal, estimates a second signal using the processed uplink, processes a signal derived from the satellite uplink to reduce the effect of the second signal, and so on, in an iterative process to form increasingly accurate estimates of the desired signal and each signal which is interfering with it.

The interference mitigation may be performed on the ground, or on a satellite.

One or more interferors may be further user terminal signals.

Other aspects and preferred embodiments of the invention are as described or claimed hereafter, with advantages which will be apparent from the following.

### BRIEF DESCRIPTION OF THE DRAWINGS

Embodiments of the invention will now be described, by way of example only, with reference to the accompanying drawings, in which:
Figure 1 is a block diagram showing schematically the elements of a first communications system embodying the present invention;
Figure 2a is an illustrative is a block diagram showing schematically the elements of mobile terminal equipment suitable for use with the present invention; and
Figure 2b is a corresponding block diagram;
Figure 3 is a block diagram showing schematically the elements of an Earth station node forming part of the embodiment of Figure 1;
Figure 4 illustrates schematically the beams produced by a satellite in the embodiment of Figure 1;
Figure 5 illustrates schematically the disposition of satellites forming part of Figure 1 in orbits around the Earth;
Figure 6 is a diagram illustrating schematically the geometry of some interference sources;
Figure 7 is a diagram showing cross-correlation between a satellite uplink signal and stored signals;
Figure 8 is a block diagram of interference mitigation means of a first embodiment forming part of an Earth station node of Figure 3;
Figure 9 (comprising Figures 9a and 9b) is a flow diagram illustrating the operation of the first embodiment in mitigating interference;
Figure 10 is a flow diagram illustrating the operation of the first embodiment in updating interference estimates; and
Figure 11 is a flow diagram illustrating the operation of a second embodiment in mitigating interference.

### GENERAL ASPECTS OF EMBODIMENTS

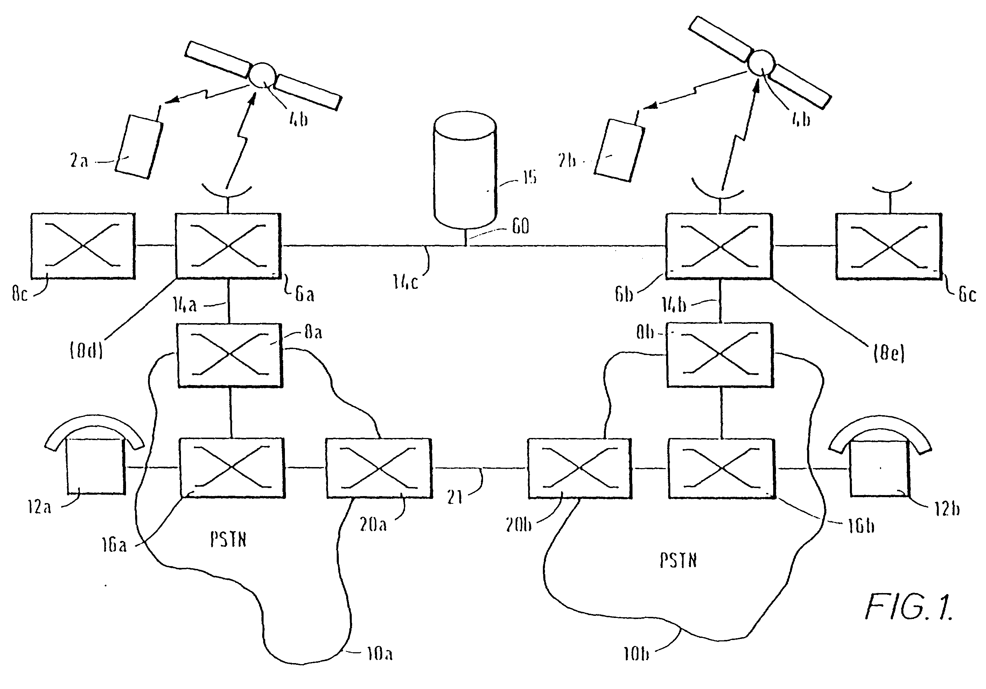

Referring to Figure 1, a satellite communications network according to this embodiment comprises mobile user terminal equipment 2a, 2b (e.g. handsets 2a and 2b); orbiting relay satellites 4a, 4b; satellite Earth station nodes 6a, 6b; satellite system gateway stations 8a, 8b; terrestrial (e.g. public switched) telecommunications networks 10a, 10b; and fixed telecommunications terminal equipment 12a, 12b.

Interconnecting the satellite system gateways 8a, 8b with the Earth station nodes 6a, 6b, and interconnecting the nodes 6a, 6b with each other, is a dedicated ground-based network comprising channels 14a, 14b, 14c. The satellites 4, Earth station nodes 6 and lines 14 make up the infrastructure of the satellite communications network, for communication with the mobile terminals 2, and accessible through the gateway stations 8.

A terminal location database station 15 (equivalent to a GSM HLR) is connected, via a signalling link 60 (e.g. within the channels 14 of the dedicated network) to the gateway station and Earth stations 6.

The PSTNs 10a, 10b comprise, typically, local exchanges 16a, 16b to which the fixed terminal equipment 12a, 12b is connected via local loops 18a, 18b; and international switching centres 20a, 20b connectable one to another via transnational links 21 (for example, satellite links or subsea optical fibre cable links). The PSTNs 10a, 10b and fixed terminal equipment 12a, 12b (e.g. telephone instruments) are well known and almost universally available today.

For voice communications, each mobile terminal apparatus is in communication with a satellite 4 via a full duplex channel (in this embodiment) comprising a downlink channel and an uplink channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is handover from one satellite 4 to another.

### Terminal 2

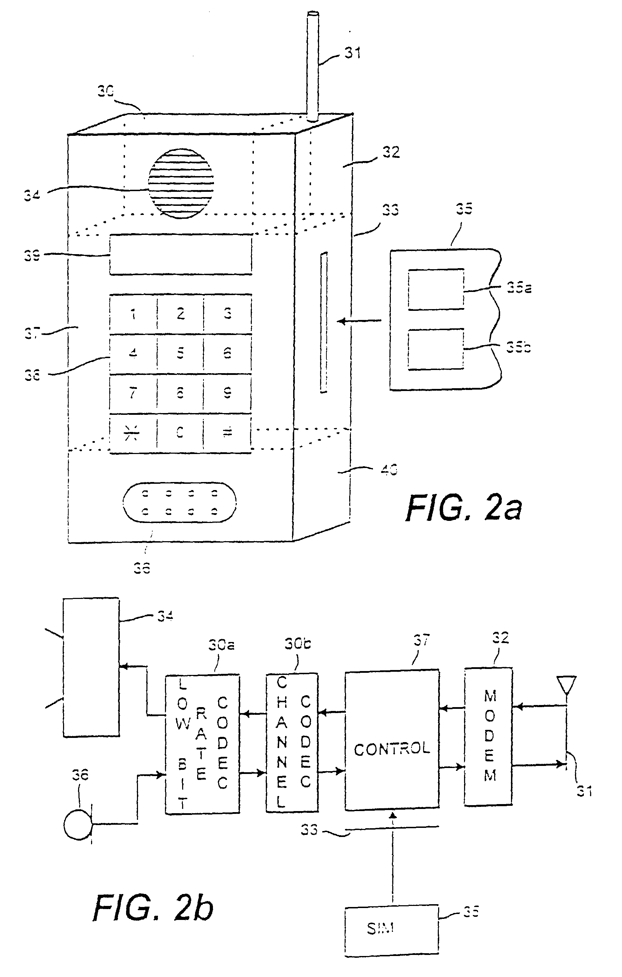

Referring to Figures 2a and 2b, a user terminal equipment 2a of Figure 1 is shown.

The terminals 2a, 2b may be similar to those presently available for use with the GSM system, comprising a digital low rate coder/decoder 30, together with conventional microphone 36, loudspeaker 34, battery 40 and keypad components 38, and a radio frequency (RF) interface 32 and antenna 31 suitable for satellite communications. A display 39 (for example a liquid crystal display) and a 'smart card' reader 33 receiving a smart card (subscriber identity module or SIM) 35 storing user information are also provided.

Specifically, the SIM 35 includes a processor 35a and permanent memory 35b.

Also provided is a terminal control circuit 37 (which may in practice be integrated with the coder 30) consisting of a suitably programmed microprocessor, microcontroller or digital signal processor (DSP) chip.

The control circuit 37 performs various functions including framing speech and data into TDMA time frames for transmission (and likewise demultiplexing received TDMA frames); and performing encryption or enciphering.

The coder/decoder (codec) 30 in this embodiment comprises a low bit rate coder 30a, generating a speech bit stream at around 3.6 kilobits per second, together with a channel coder 30b applying error correcting encoding, to generate an encoded bit stream at a rate of 4.8 kilobits per second.

The SIM memory 35b stores various subscriber identity data including the international mobile subscriber identity (IMSI), which is a unique number associated with that SIM (and hence the subscriber to whom it belongs).

### Earth Station Node 6

The Earth station nodes 6 are arranged for communication with the satellites.

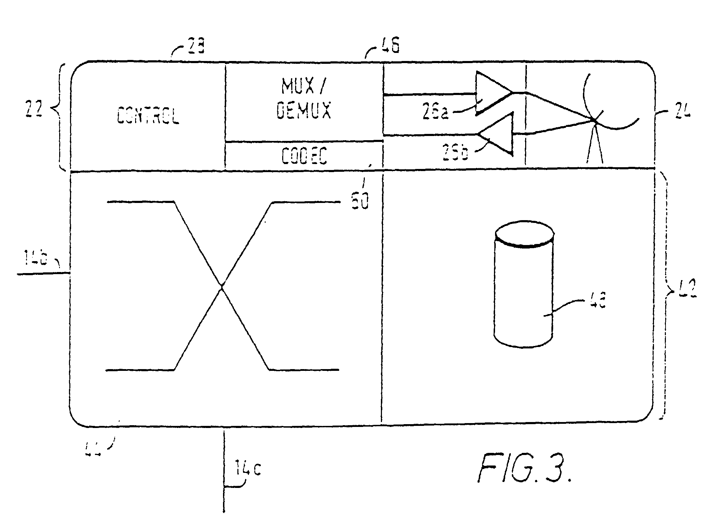

Each Earth station node 6 comprises, as shown in Figure 3, a conventional satellite Earth station 22 (functioning somewhat equivalently to the Base Station of a cellular system) consisting of at least one satellite tracking antenna 24 arranged to track at least one moving satellite 4, RF power amplifiers 26a for supplying a signal to the antenna 24, and 26b for receiving a signal from the antenna 24; and a control unit 28 for storing the satellite ephemeris data, controlling the steering of the antenna 24, and effecting any control of the satellite 4 that may be required (by signalling via the antenna 24 to the satellite 4).

The Earth station node 6 further comprises a mobile satellite switching centre 42 comprising a network switch 44 connected to the trunk lines 14 forming part of the dedicated network. It may be, for example, a commercially available mobile switch centre (MSC) of the type used in digital mobile cellular radio systems such as GSM systems. A multiplexer 46 is arranged to receive switched calls from the switch 44 and multiplex them into a composite signal for supply to the amplifier 26 via a low bit-rate voice codec 50. Finally, the Earth station node 6 comprises a local store 48 storing details of each mobile terminal equipment 2a within the area served by the satellite 4 with which the node 6 is in communication. The local store 48 acts to fulfil the functions of a visited location register (VLR) of a GSM system, and may be based on commercially available GSM products. Alternatively, satellite control may be provided from a separate control station.

The gateway stations 8a, 8b comprise, in this embodiment, commercially available mobile switch centres (MSCs) of the type used in digital mobile cellular radio systems such as GSM systems. They could alternatively comprise a part of an international or other exchange forming one of the PSTNs 10a, 10b operating under software control to interconnect the networks 10 with the satellite system trunk lines 14.

The gateway stations 8 comprise a switch arranged to interconnect incoming PSTN lines from the PSTN 10 with dedicated service lines 14 connected to one or more Earth station nodes 6.

The database station 15 comprises a digital data store which contains, for every subscriber terminal apparatus 2, a record showing the identity (e.g. the International Mobile Subscriber Identity or IMSI); the service provider station 8 with which the apparatus is registered (to enable billing and other data to be collected at a single point) and the currently active Earth station node 6 with which the apparatus 2 is in communication via the satellite 4.

Thus, in this embodiment the database station 15 acts to fulfil the functions of a home location register (HLR) of a GSM system, and may be based on commercially available GSM products.

Periodically, the Earth station nodes measure the delay and Doppler shift of communications from the terminals 2 and transmit these to the database station 15, which calculates the rough terrestrial position of the mobile terminal apparatus 2 using the differential arrival times and/or Doppler shifts in the received signal, and knowledge of which beams of which satellites 4 the signal was received through. The position is then stored in the database 48.

### Satellites 4

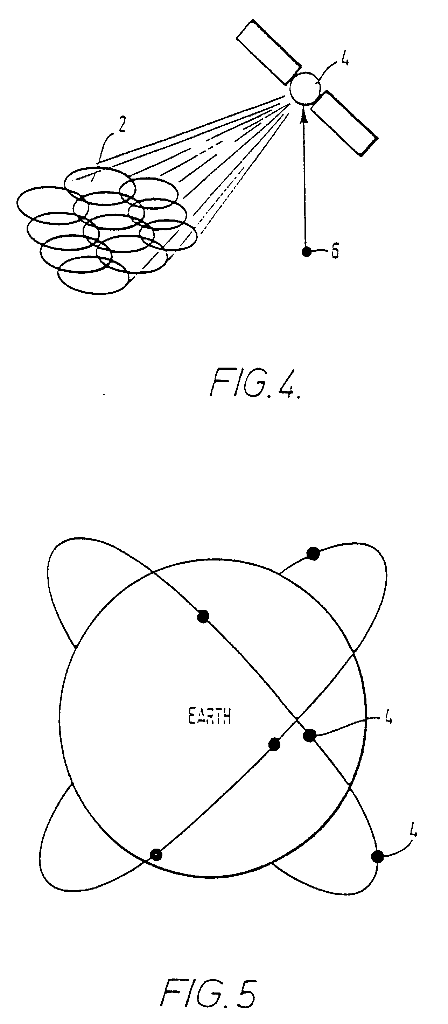

The satellites 4a, 4b comprise generally conventional communications satellites such as the HS601 available from Hughes Aerospace Corp, California, US with a communications payload, which may be as disclosed in GB 2288913. Each satellite 4 is arranged to generate an array (typically hexagonal) of beams covering a footprint beneath the satellite, each beam including a number of different frequency channels and time slots, as described in GB 2293725 and illustrated in Figure 4.

On each beam, the satellite therefore transmits a set of user downlink frequencies. The frequencies are separated by a frequency guard band. The downlink frequencies on adjacent beams are different, so as to permit frequency re-use between beams. Each beam therefore acts somewhat in the manner of a cell of a conventional terrestrial cellular system. For example, there may be 121 or 163 beams. The frequencies are allocated between satellites such that within each plane, neighbouring satellites use different frequencies on those of their beams which overlap and satellites from one plane use different frequencies than those used by satellites of the other plane.

Similarly, each satellite is arranged to receive radiation in an array of beams, which in this embodiment cover the same footprints beneath the satellites, to provide a plurality of user uplink beams each carrying different frequencies.

In this embodiment, each uplink and downlink frequency carries a plurality (e.g. 6) of time division channels, so that each mobile terminal 2 communicates on a channel comprising a given time slot in a given uplink and downlink frequency. The time slots are separated by a short guard interval.

The satellites of this embodiment function as repeaters. Each satellite acts as a "bent pipe", amplifying and relaying signals from the user terminals 2 on the user terminal uplink, to the Earth station nodes 4 on a feeder downlink. Also (although it is not germane to this invention) signals from the Earth stations 4 on a feeder uplink are relayed down to the user terminals 2 on a user downlink.

Every frequency/channel in the user uplink therefore has an equivalent channel in the feeder downlink, and the satellite payload operates in accordance with a predetermined routing table, to translate a user link frequency from one of the user uplink beams (e.g. at around 2 GHz) to an equivalent frequency channel in the feeder downlink (e.g. at 5 or 7 GHz). The satellite performs amplification of the user uplink signal, in this embodiment at an intermediate frequency. The user uplink signals are not, however, digitally decoded and then remodulated. Thus, RF information such as delay and Doppler shift is preserved in the feeder downlink signal reaching the Earth station node 6.

The position of each satellite is known to a high degree of accuracy, using Earth based observations and/or by the use of a global positioning system (GPS) receiver in each satellite 4. The movement of each satellite, defined by the parameters of its orbit (the ephemeris) therefore enables each Earth station node 6 to know where the satellite is, and where it will be in future.

From a knowledge of the shape of the Earth (the polar and equatorial radii, for example) and the satellite orbits, the satellite Earth station node 6 can calculate position data of a transmitting source from its signal propagation delay and its Doppler shift in the uplink signal.

The satellites 4a are arranged in a constellation in sufficient numbers and suitable orbits to cover a substantial area of the globe (preferably to give global coverage).

For example 10 (or more) satellites may be provided in two (or more) mutually orthogonal intermediate circular orbits at an altitude of, for example, about 10,500 kilometres (6 hour orbits) and equatorial inclinations of 45°, as shown in Figure 5. Equally, however, larger numbers of lower satellites may be used, as disclosed in EP 0365885, or other publications relating to the Iridium system, for example.

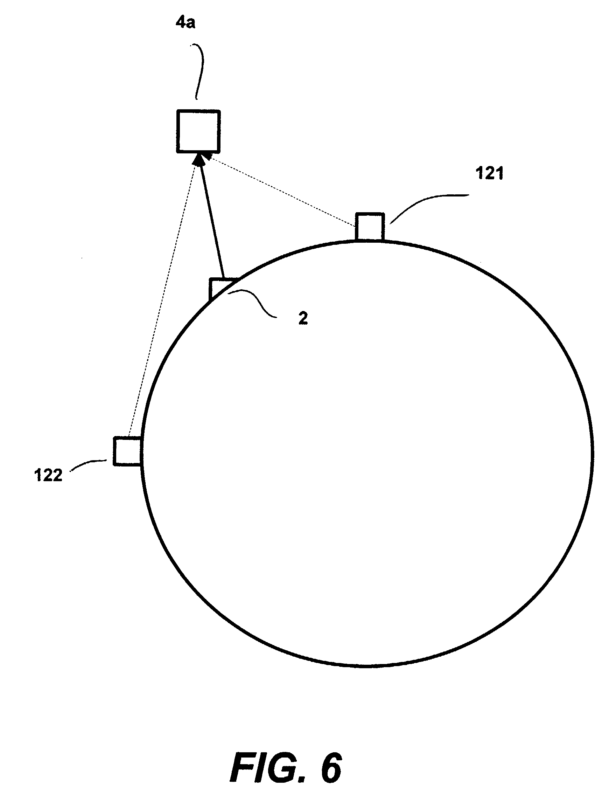

Referring to Figure 6, the effects of two interferors 122, 121 are shown on a system comprising a mobile terminal 2 and a satellite 4a. The interferors may be, for example, television broadcasting stations, terrestrial mobile communications base stations; terrestrial fixed link microwave repeaters; or terrestrial mobile communications terminal equipment. In general, *a priori* knowledge of the position of at least some of the interferors 121, 122 is not available.

Each of the satellites 4 is moving overhead with a substantial velocity over the ground. The effect of this is that, at any instant, the signals from the user terminal 2 and the interferors 121, 122 will be exhibiting an amount of Doppler shift which depends upon their distance in front of, or behind, the sub-satellite point on Earth, and upon their lateral distance from the sub-satellite track of the satellite across the Earth.

Additionally, the signal from each interferor will be delayed by an amount which depends upon the slant path from the transmitter to the satellite, which in turn is a function of the satellite altitude (which is fixed), the radius of the Earth and the distance of the transmitter from the sub-satellite point.

Unless the interference source 121 or 122 is exactly located at the same position as the user terminal 2, both the delay and Doppler shift of the component signals from the two will be different.

Referring once more to Figure 6, at the time shown, the satellite 4a is receiving the signal from the user terminal 2, and from each of the interferors 121 and 122.

It is apparent that for the satellite 4a, the signal from the user terminal 2 is the least delayed, followed by that from the interferor 121 and then that from the interferor 122.

Thus, the signal which is supplied on the feeder downlink from the satellite 4 to the Earth station 6 is made up of a component signal from the user terminal 2, a component signal from the interferor 121, a component signal from the interferor 122, component signals from other user terminals or interferors, and background noise.

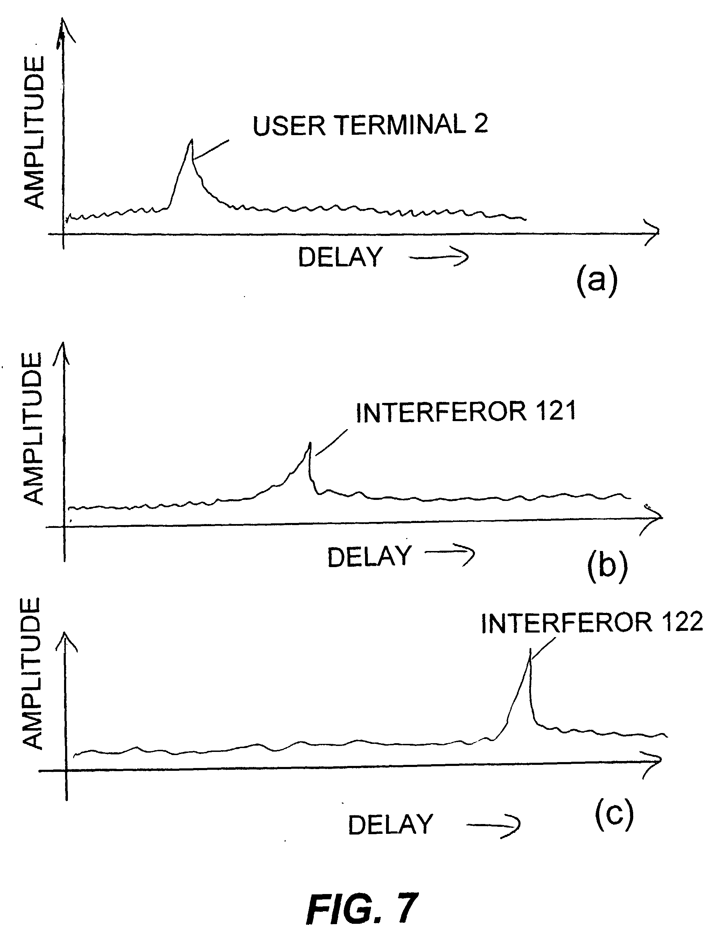

Referring to Figure 7, the cross correlation function of the downlink signal received from the satellite with three spectra corresponding to the wanted signal (a) and two interferors (b), (c), is illustrated. Cross correlation, as is well known in the art, is the operation of taking, for each of a range of delays, the product of a first signal (e.g. the downlink signal) and of a second signal (e.g. representing the average spectrum of the wanted signal, or an interferor) delayed by the delay amount, summed over all time.

At the delay value where two signals are time-aligned, the sum of the product of the two signals over time is relatively large, depending upon the similarity between the two. Thus, by correlating the downlink signal (and hence the user uplink signal received at the satellite 4) with a given stored signal representing an interferor or a wanted user terminal, the presence of that signal in the downlink can be detected and its strength and relative delay can be estimated from the amplitude and position of the peak in the output of the cross correlator.

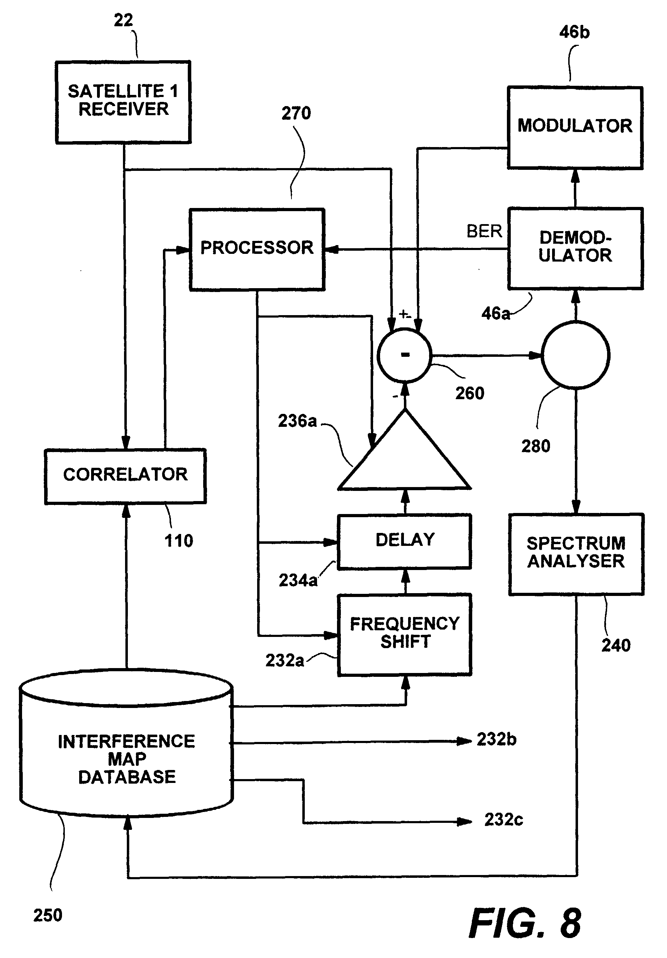

Referring to Figure 8, interference mitigation apparatus of this embodiments is provided at the Earth station node 6. The output of the satellite receiver 22 is supplied to a subtractor node 260, and to a correlator 110.

The correlator 110 is arranged to cross correlate the signal from the satellite receiver 22 (more specifically, the signal corresponding to one user frequency channel from one beam thereof at a time) with a reference signal stored in a database 250.

The database 250 stores a plurality of records, each comprising data (e.g. co-ordinates) defining a terrestrial position; data defining a representation of the signal (for example, a stored set of Fourier transform coefficients defining the signal), and data defining the relative strength or amplitude of the signal.

Some stored signals (e.g. those relating to sites such as radio astronomy antennas or radar stations) have fixed positions, whereas others relate to sites which are either mobile (e.g. terrestrial cellphones) or occur at several sites (e.g. terrestrial base stations) and do not have associated stored fixed position data.

The output of the cross correlator 110, representing the delay value and amplitude of the peak in the cross correlation spectrum, is supplied to a processor 270, which controls a plurality of parallel adjustment devices each comprising a frequency shift stage 232, a delay stage 234 and a gain stage 236, cascaded together, the output of the last being supplied to the subtraction node 260. Only a first such device comprising stages 232a, 232b, 232c is shown for clarity. One of the stored signals within the interference map database is selectively supplied to the input of each frequency shift stage 232.

The output of the subtract node 260 is supplied to a signal output port 280, at which the interference-mitigated signal for the user terminal channel is available. Connected to the output port 280 is a demodulator and demultiplexer 46a forming part of the modulator/demodulator and multiplexer/demultiplexer 46.

The output of the demodulator 46a is supplied to a modulator 46b also forming part of the multiplexer/demultiplexer 46. After the demodulator 46a has demodulated the interference mitigated signal, applying error correction, it is multiplexed and remodulated by the modulator 46b to provide a "clean" regenerated estimate of the original signal from the user terminal 2a (or, in a TDMA signal, from all such time-divided channels on a frequency subcarrier). This is selectively supplied to the subtraction node 260.

Also connected to the output port is a spectrum analyser 240, providing a Fourier transform spectrum of the signal appearing at the output port for storage in the interference map database 250.

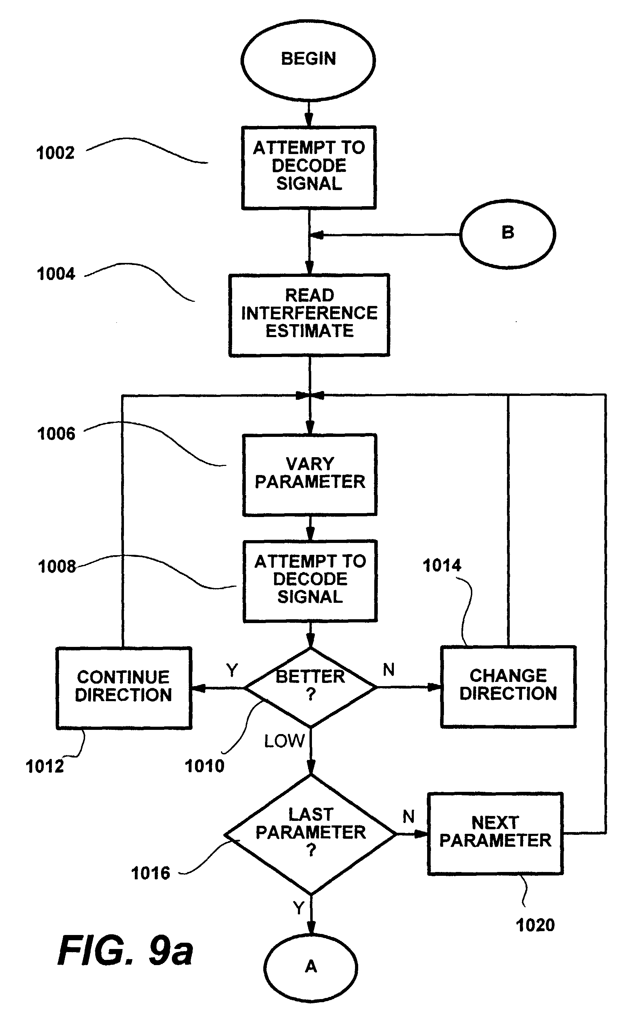

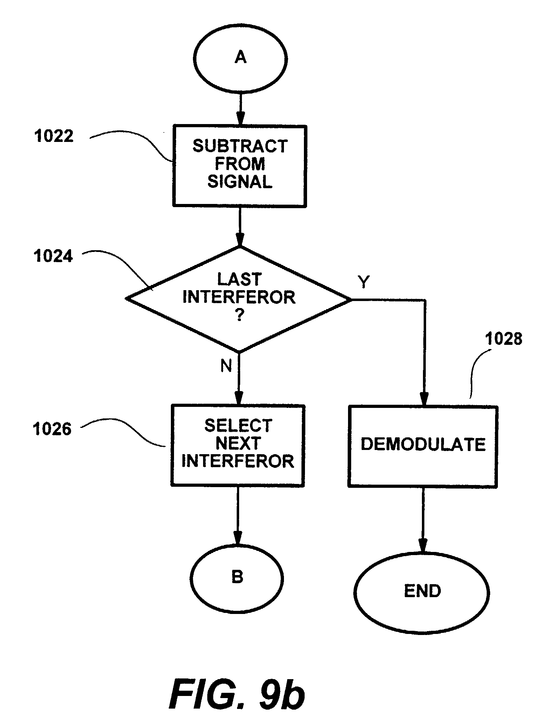

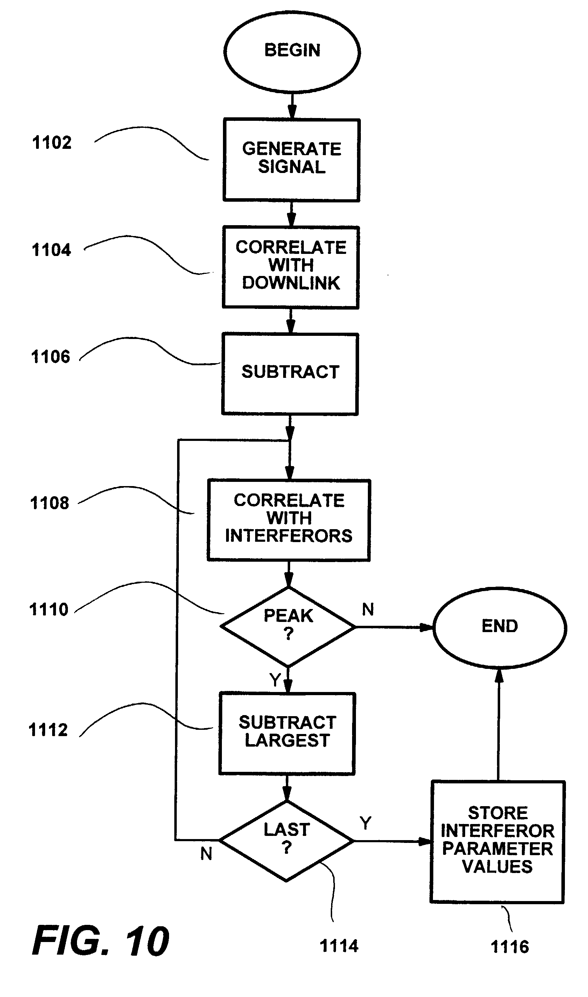

The operation of this embodiment will now be described with reference to Figures 9 and 10.

Initially, no signal is supplied from the interference map database 250 to the frequency shift stage 232a. The downlink signal from the satellite receiver 22 therefore passes through the subtract node 260 unaffected, to the output port 280. An attempt is made to demodulate the signal in the demodulator 46a. The quality of the demodulated signal (i.e. the bit error rate (BER)) is determined, as an initial baseline error rate.

Next, in step 1004, a first stored interference signal is supplied from the interference map database 250 to the frequency shift stage 232. The interference signal may correspond to a first predetermined interference source, such as a television transmitter, or a radar signal.

The processor 270 reads any stored position data defining the position of the interference source corresponding to the signal, and supplies an estimate of the Doppler shift due to the motion of the satellite 4, taking into account the known satellite position and orbital data. This Doppler shift estimate is supplied to the control port of the frequency shift stage 232. Some initial values for amplitude and delay are supplied to the amplifier and delay stages 236, 234 respectively; for example, the values of amplitude and delay last used with the stored signal, or those calculated from the stored position and strength data (if any) for that stored interference signal.

The delay, frequency shift and amplitude form parameters of the interference estimate formed from the signal stored in the interference map database 250, which are supplied to the subtractor node 260.

Next, in step 1008, the output of the subtractor node (representing the downlink signal with the estimated interference signal subtracted from it) is supplied to the demodulator 46a, and demodulated.

In step 1010, the bit error rate of the newly demodulated signal is compared with that of the baseline decoded signal. If it is better (i.e. if the current interference estimate has improved reception) it replaces the baseline.

Control then returns to 1006, in which the processor varies the value of a first parameter (for example, the frequency shift) and then repeats steps 1008 and 1010. If the effect of varying the parameter is further to improve the demodulation of the user terminal signal, the next change in the parameter continues in the same direction as the previous change (step 1012). If the effect is to make the reception worse, then (step 1014) the direction of the change in parameter value is switched prior to re-execution of step 1006.

Thus, steps 1006 to 1014 define an iterative search for an optimum value of the selected parameter to improve the quality (e.g. bit error rate) of the received signal.

When the effect of varying the parameter does not substantially affect the bit error rate of the demodulated signal (either because an optimum value of the parameter has been reached, or because no bit error rate approaching that of the base line signal is found) then the exit condition at step 1010 is met and in step 1016 it is determined whether the last parameter (i.e. in this case the last of frequency, delay and gain) has been varied and if not, in step 1020, the next parameter is selected and the processor 270 repeats the iterative search of steps 1006 to 1014.

Although not explicitly shown in Figure 9a, it will be clear that the process thereof may be repeated in multiple cycles, so that after optimising each of the three parameters, some or all may be re-optimised.

Referring to Figure 9b, having located values of the control parameters of the interference estimate which minimise the bit error rate of the demodulated signal when the interference estimate is subtracted from the downlink signal, the optimised interference estimate is subtracted at the subtract node 260 from the downlink signal (step 1022) to form an interference-mitigated signal.

In step 1024, it is determined whether the last stored interference signal within the interference map database 250 has been used. If so, the signal at the output port is demodulated by the demodulator 46a and supplied for connection into the telecommunications network.

If not, then in step 1026, the next interference signal from the interference database 250 is selected and the process of Figure 9a recommences at step 1004, but retaining the or each previously optimised interference signal. Accordingly, the current control settings for the frequency shift, delay and gain stages 232a, 234a, 236a are retained and the processor 270 varies the parameters of the next stages 232b, 234b, 236b (not shown) to locate an optimum set of parameters of the second interference signal.

It will therefore be seen that the process of Figure 9 provide optimisation of each interference estimate in turn, in the order in which they are retrieved from the interference database 250.

The interference database 250 in this embodiment preferably retains some position and strength information for each interference signal, and is responsive to the position of each beam on the ground, to retrieve first those interference signals which have previously been detected in that area, and in order of their strength, so that stronger interfering signals are subtracted first. As the position of each beam is continually varying on the ground, for a non-geostationary satellite, the order in which the interference signals are retrieved is varied periodically.

Having determined optimum interference mitigation settings, the settings used may be retained for a period of time up to a relatively small fraction of the time taken by a beam to traverse its width (which, for the orbits and numbers of beams given above, will typically be a few minutes), since during that period, the identity of the interference sources may not change greatly.

Referring to Figure 10, after deriving optimal interference mitigation parameters, the interference-mitigated signal at the output port 280 is demodulated as mentioned above in step 1028.

Then, in step 1102, the demodulator bit stream is supplied to the multiplexer / modulator 46b, which regenerates the user terminal signals. In step 1104, the regenerated signal is correlated with the downlink signal by the correlator 110, to determine the amplitude and delay of the user terminal signal within the downlink, relative to those of the regenerated signal.

The amplitude and delay of the regenerated signal are then adjusted to match these, and it is supplied to the subtractor node 260, to be subtracted from the downlink signal in step 1006. Accordingly, the signal now appearing at the output port 280 corresponds to the noise and interference, with the wanted user terminal signal removed.

This residual signal is then correlated with each of the stored interference signals in the interference database 250 and those giving rise to correlation peaks are located in step 1110.

In step 1112, the interference signal giving rise to the largest correlation peak is subtracted from the downlink signal. The process of steps 1108-1112 is then repeated, correlating each interferer with the signal from which the first interferer has been subtracted, until no further interference peaks have been detected. In this way, estimates of the amplitude and delay for each interference signal present are obtained, and stored for subsequent use in step 1116. Removing the wanted signal, followed by the interferers, in order of magnitude, provides for more accurate detection and characterisation of lower amplitude interferers since these are not so masked by higher valued signals.

Having thus detected and stored suitable delay and amplitude values, these are then used in subsequent interference mitigation as described in relation to Figure 9.

Having removed all interferers which are stored in the interference database 250, the autocorrelation spectrum of the residue signal is calculated by the correlator 110.

As is well known in the art, the autocorrelation spectrum of a signal comprises a set of amplitude values corresponding to delay values. Each amplitude value comprises the sum over time of the products of the instantaneous signal value with the signal value delayed by the corresponding delay.

Thus, for a signal which has some repetitive character over time, one or more peaks will be formed in the autocorrelation function, at delay values corresponding to the repeat intervals of the signal. On the other hand, for thermal noise or the like, the autocorrelation spectrum has no significant peaks.

Accordingly, where peaks are detected in the auto correlation function, the residue signal is analysed by the spectrum analyser 240 over a period of time to provide an averaged signal spectrum, which is stored in the interference database 250 for subsequent use as an interference estimate.

This embodiment may be summarised as follows:
1. Find optima for a stored interference signal.
2. Subtract that estimate from the receive signal.
3. Repeat the process for the next stored signal.
4. Having decoded the wanted signal, regenerate it then subtract it from the downlink signal from the satellite.
5. From the residue, re-estimate the parameters of each stored interference signal.
6. Subtract that interference signal from the residue signal and repeat the process.
7. Locate any remaining interference signals and store them for subsequent use.

This process is repeated for each carrier signal in each beam of each satellite.

It will be apparent that the stored estimates of interference signals held in the database 250 are in general not exactly the same as the interference signal components present in the satellite uplink signal, which (for data-carrying signals such as mobile communications or television signals) will vary over time whilst maintaining fixed long-term characteristics.

The process of estimating and subtracting each signal component in turn does, however, give the possibility of reducing the magnitude of some interfering signals to the extent that others (or the wanted signal) can accurately be estimated, and subtracted. Removing the accurately reconstructed wanted signal leaves the interference components of the uplink signal, which can then be used as, or to extract parameters such as delay, amplitude or Doppler shift of, a more accurate estimate for future use in interference mitigation.

Even if the wanted signal cannot be perfectly demodulated, partial demodulation improves the estimate of interference which can then be cancelled from the downlink signal again. The wanted signal may then be re-demodulated and subtracted once more from the downlink signal, to give a further improved estimate of the interference. This iterative process can be repeated until a desired BER is achieved, or no further improvement in demodulation can be obtained.

### SECOND EMBODIMENT

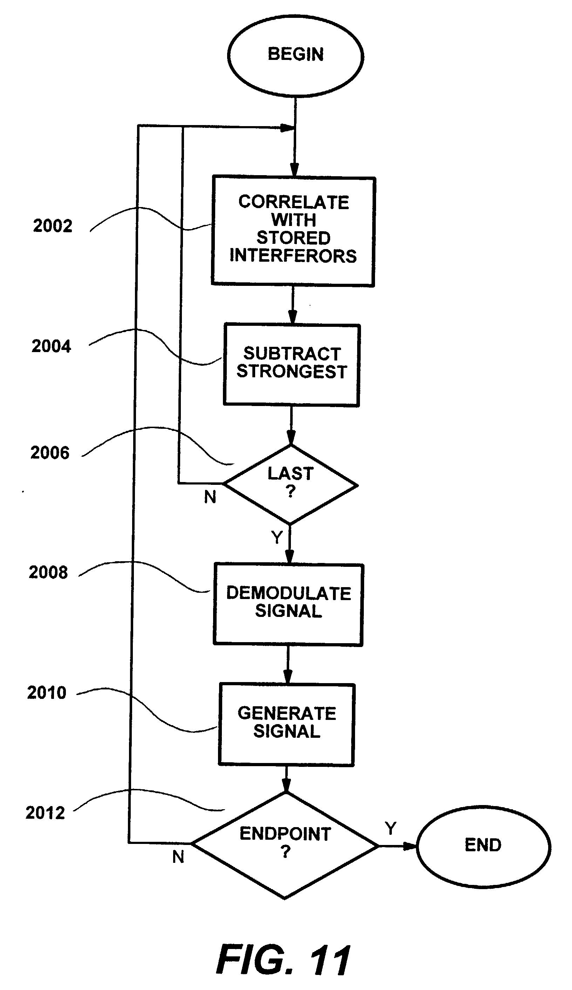

Referring to Figure 11, in a second embodiment, the above described process is modified by the interchanging of several steps. In a first step 2002, the downlink signal is correlated with each stored interference signal, and in a step 2004, the strongest is optimised and subtracted.

If the last interference signal has not yet been processed (step 2006) the process is repeated. Finally, in step 2008, the wanted user terminal signal is demodulated, regenerated and subtracted, and the process is repeated to re-estimate the interference signals until a desired exit criterion is met (step 2010), which may for example be a desired bit error rate.

Thus, this embodiment modifies the first in that the order in which interferers are subtracted is dictated by the magnitude of their correlation with the downlink signal.

### OTHER EMBODIMENTS

Although the foregoing embodiments describe use of interference estimates stored in a database, the invention is applicable more broadly to use of any technique for roughly characterising and extracting an interference signal. As an initial estimate, for example, even sine or square waves could be used. A variety of such initial estimates could in turn be tried.

Nor is it necessary to completely demodulate the signal; provided the first interference estimate gives some reduction in interference, a next interferor signal can then be removed and the first can then be more accurately re-estimated. Several rounds of iteration for each approximate interference estimate can be used, with the interference estimates becoming progressively more refined in each round, until the point is reached where the wanted signal can be detected or, equivalently, the interference can be described with adequate accuracy for complete removal.

Accordingly, it will be understood that the database of interference estimates need not contain position information or even a detailed characterisation of the interference signal; it may simply contain some initial data for one or more interference models (e.g. of a sine wave of a particular frequency or a square wave of a particular frequency). In such cases, a database may be unnecessary and may be replaced by some other means of generating an initial interference signal estimate for subsequent refinement during iterative demodulation.

Whilst bit error rate (BER) has been mentioned as one possible suitable signal quality metric, others (e.g. signal to noise ratio (SNR); signal variance; etc. could be used.)

It will be clear from the foregoing that the above described embodiment is merely one way of putting the invention into effect. Many other alternatives will be apparent to the skilled person and are within the scope of the present invention.

Although the interference mitigation apparatus has been described within the Earth Station node 6, it would be possible to position it elsewhere, or even on each satellite, where it would process the uplink signal directly rather than the feeder downlink signal. This is preferred where the invention is practised with "smart" satellites having on-board control of switching or handover.

Although subtraction of the interference estimates has been described, it would be possible to use the interference estimates to generate a matched cancellation filter instead, to filter the downlink signal. Either subtraction or filtering could be performed in the spectral domain, using transforms of the signals, rather than in the time domain as discussed above.

The data in the interference database may be derived from a spare satellite, as disclosed in our earlier application EP 0858176, or our earlier filed application EP98309982.1 dated 4 December 1998, agents reference J41085EP. Alternatively, it may be derived as described in our co-pending applications 98310352.4, filed 16 December 1998 (agents reference J41086EP), or 9930......... filed 10 February 1999 (agents reference J41079EP). All of these are incorporated herein by reference.

The interference mitigation means may include means for demodulating, demultiplexing and/or decoding one or more unwanted ("interference") signals, such as a terrestrial mobile telephone decoder or a television receiver. These may be used in the same manner as the above-described demodulator and remodulator, to reconstruct a more accurate version of the interference signal(s) to subsequently be cancelled from the uplink signal.

The numbers of satellites and satellite orbits indicated are purely exemplary. Smaller numbers of geostationary satellites, or satellites in higher altitude orbits, could be used; or larger numbers of low Earth orbit (LEO) satellites could be used. Equally, different numbers of satellites in intermediate orbits could be used.

Although TDMA has been mentioned as suitable access protocol, the present invention is fully applicable to other access protocols, such as code division multiple access (CDMA) or frequency division multiple access (FDMA).

Equally, whilst the principles of the present invention are envisaged above as being applied to satellite communication systems, the possibility of the extension of the invention to other communications systems (e.g. digital terrestrial cellular systems such as GSM) is not excluded.

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept.

## Claims

1. A method of mitigating interference in a user uplink signal received at a satellite from a terrestrial user terminal comprising the steps of:
generating an estimated interference signal in accordance with one or more parameters;
processing a signal derived from said uplink signal in accordance with said estimated interference signal to reduce the magnitude of corresponding components within said uplink signal; and
varying one or more parameters of said estimated interference signal, to determine a respective value of each said parameter to minimise the level of said components in said uplink signal.

2. A method according to claim 1, wherein said parameter comprises signal amplitude.

3. A method according to claim 1 or claim 2, wherein said parameter comprises delay.

4. A method according to any of claims 1 to 3, wherein said parameter comprises Doppler shift.

5. A method of mitigating interference between a first signal and a second signal in a user uplink signal received at a satellite, comprising the steps of:
providing signal estimate data corresponding to at least said first interference signal;
generating therefrom an estimated first signal;
processing a signal derived from said uplink signal in accordance with said estimated first signal to reduce the magnitude of said first signal therein;
providing signal estimate data corresponding to at least said second interference signal;
generating therefrom an estimated second signal; and
further processing said processed signal in accordance with said estimated second signal.

6. A method according to claim 5, in which said step of further processing comprises deriving at least one parameter of said second signal for subsequent use.

7. A method according to claim 6, wherein said step of deriving comprises demodulating said second signal.

8. A method according to claim 7, further comprising remodulating said second signal and processing a signal derived from said uplink signal in accordance with said remodulated second signal to reduce the magnitude of said second signal therein.

9. A method according to claim 6, in which said subsequent use comprises processing a signal derived from said uplink signal in accordance with said parameter to reduce the magnitude of said second signal therein.

10. A method according to any preceding claim, wherein the step of processing comprises subtracting said estimated interference signal.

11. A satellite communications system comprising at least one satellite (4) in orbit about the Earth, and being for receiving a user uplink signal from a user terminal (2) adjacent the Earth, in the presence of co-channel interference from at least one interference source (121) adjacent the Earth, further comprising means for interference mitigation, characterised in that said interference mitigation means comprises an interference store (250) for storing interference data characterising at least a first signal, and means (270, 232, 234, 236) for iteratively forming an interference estimate from said data in accordance with at least one variable parameter, for locating a value thereof to maximise the mitigation of said uplink signal, and for processing said uplink signal in accordance with said value and said interference data.

12. A satellite communications system comprising at least one satellite (4) in orbit about the Earth, and being for receiving a user uplink signal from a user terminal (2) adjacent the Earth, in the presence of co-channel interference from at least one interference source (121) adjacent the Earth, further comprising means for interference mitigation, characterised in that said interference mitigation means is for performing the process of claim 5.

13. The system of claim 11 or claim 12, further comprising an Earth station (6), in which said satellite is a repeater and is arranged to transmit the content of said user uplink signal on a feeder downlink signal to said Earth station (6), and in which said interference mitigation means is on Earth and in communication with said Earth station (6).

14. Interference mitigation means for the system of any of claims 11 to 13.

15. Interference mitigation means for performing the process of any of claims 1 to 10.
